(19) **Europäisches Patentamt / European Patent Office / Office européen des brevets**

(11) **EP 3 301 132 B1**

(12) # EUROPEAN PATENT SPECIFICATION

(45) Date of publication and mention
of the grant of the patent:
**20.03.2019 Bulletin 2019/12**

(51) Int Cl.:
**B60C 11/00** (2006.01)      **C08J 9/10** (2006.01)
**B60C 1/00** (2006.01)       **C08J 9/00** (2006.01)
**C08K 3/36** (2006.01)       **C08L 7/00** (2006.01)
**C08L 9/00** (2006.01)       **C08L 9/06** (2006.01)

(21) Application number: **17193894.7**

(22) Date of filing: **28.09.2017**

(54) **COLD WEATHER TIRE**

REIFEN FÜR KALTES WETTER

PNEU POUR TEMPS FROID

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2016 JP 2016193695**

(43) Date of publication of application:
**04.04.2018 Bulletin 2018/14**

(73) Proprietor: **SUMITOMO RUBBER INDUSTRIES, LTD.**
**Kobe-shi,**
**Hyogo-ken 651-0072 (JP)**

(72) Inventors:
• **ONO, Shuichiro**
**Kobe-shi, Hyogo 651-0072 (JP)**

• **YOKOYAMA, Yuka**
**Kobe-shi, Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A1- 1 820 668      EP-A1- 2 060 604**
**EP-A1- 2 105 461      US-A- 5 965 661**
**US-A1- 2007 185 253**

• **DATABASE WPI Week 198932 Thomson Scientific, London, GB; AN 1989-230894 XP002778180, -& JP H01 165635 A (YOKOHAMA RUBBER CO LTD) 29 June 1989 (1989-06-29)**

**Description**

TECHNICAL FIELD

The present invention relates to a cold weather tire. The term "cold weather tire" as used herein refers to any tire that is intended to be used at low temperatures and has good performance on ice or snow. Specifically, it conceptually includes any of the following tires: snow tires marked on sidewalls as M+S, M.S, or M&S, and tires for the winter season and/or cold weather sold as winter tires or studless winter tires.

BACKGROUND ART

In view of low-temperature properties, rubber components consisting only of natural rubber and polybutadiene rubber have been widely used in cap treads of cold weather tires. A further technique that has been used to improve performance on ice is to foam a rubber component (see Patent Literature 1).

Moreover, due to the recent improvement of road conditions, more and more vehicles with cold weather tires are driven at high speeds. However, since conventional cold weather tires place an importance on the performance on ice and snow achieved during running at relatively low speeds, they tend to show inferior handling stability and grip performance during high speed running.

Particularly in the case of so-called foamed tires which include foams or hollow fibers, since these tires have low rubber density and low hardness, they have poor flexibility and thus tend to be greatly inferior to non-foamed tires in terms of high speed performance on snow- and ice-free roads.

EP 2 105 461 A1 discloses a rubber composition and a pneumatic tire using the composition, more particularly the rubber composition having closed cells and comprising at least one rubber component selected from natural rubber and diene-based synthetic rubbers, silica, an organic fiber and a silane coupling agent comprising a protected mercaptosilane.

US 5 965 661 A discloses a sulfur cross-linkable unvulcanized rubber mixture for the production of treads, in particular for snow tires, which contains the rubber mixture components polyisoprene, polybutadiene and styrene-butadiene copolymer as well as further fillers and additives.

JP H01 165 635 A describes a rubber composition comprising polyisoprene rubber, polybutadiene rubber, styrene-butadiene copolymer rubber, softening agent and dried powdery product of a natural rubber latex serum.

Therefore, there is a need to improve high speed performance (handling stability, grip performance) on snow- and ice-free roads at low temperatures while ensuring performance on ice and snow, thereby achieving a balanced improvement in properties, including fuel economy, abrasion resistance, performance on ice and snow, and high speed performance (handling stability, grip performance) on snow- and ice-free roads at low temperatures.

CITATION LIST

PATENT LITERATURE

Patent Literature 1: JP 2015-129238 A

SUMMARY OF INVENTION

TECHNICAL PROBLEM

The present invention aims to solve the above problems and provide a cold weather tire that achieves a balanced improvement in fuel economy, abrasion resistance, performance on ice and snow, and high speed performance (handling stability, grip performance) on snow- and ice-free roads at low temperatures.

SOLUTION TO PROBLEM

The present invention relates to a cold weather tire, including a cap tread, the cap tread being formed of a rubber composition for cap treads that contains: a rubber component including polybutadiene rubber, styrene butadiene rubber, and at least one of natural rubber or polyisoprene rubber; and a filler, the rubber composition having a combined amount of the natural rubber, the polyisoprene rubber, and the polybutadiene rubber of 80% by mass or more, an amount of the polybutadiene rubber of 30% by mass or more, and an amount of the styrene-butadiene rubber of 0.3% to 10% by mass, each based on 100% by mass of the rubber component, the filler including 60% by mass or more of silica based on 100% by mass of the filler, the cap tread having cells or voids or both.

The rubber composition for cap treads preferably has a combined amount of the natural rubber, the polyisoprene rubber, and the polybutadiene rubber of 90% by mass or more, and an amount of the styrene butadiene rubber of 0.3% to 5% by mass, each based on 100% by mass of the rubber component.

The rubber composition for cap treads preferably contains the silica in an amount of 50 parts by mass or more per 100 parts by mass of the rubber component.

The polybutadiene rubber in the rubber composition for cap treads preferably has a cis content of 70% by mass or more.

The rubber composition for cap treads preferably contains a plasticizer in an amount of 20 parts by mass or more per 100 parts by mass of the rubber component.

ADVANTAGEOUS EFFECTS OF INVENTION

The cold weather tire of the present invention includes a cap tread formed of a rubber composition for cap treads. The rubber composition for cap treads contains predetermined amounts of a rubber component including polybutadiene rubber, styrene butadiene rubber, and natural rubber and/or polyisoprene rubber, and a filler including silica. The cap tread has cells and/or voids. Such a cold weather tire achieves a balanced improvement in fuel economy, abrasion resistance, performance on ice and snow, and high speed performance (handling stability, grip performance) on snow- and ice-free roads at low temperatures.

DESCRIPTION OF EMBODIMENTS

The cold weather tire of the present invention includes a cap tread formed of a rubber composition for cap treads. The rubber composition for cap treads contains predetermined amounts of a rubber component including polybutadiene rubber (BR), styrene butadiene rubber (SBR), and natural rubber (NR) and/or polyisoprene rubber (IR), and a filler including silica. The cap tread has cells and/or voids.

When silica is incorporated, it is usually difficult to control the distribution of silica among layers of different rubbers such as BR and NR and the dispersion thereof in the rubber layers. In the present invention, in contrast, since the cap tread containing silica has a rubber component that includes predetermined amounts of BR and NR and/or IR and a small amount of SBR, it shows improved processability so that the morphology can be stabilized, despite the fact that it is a system containing BR and NR and/or IR, the morphology of which is difficult to control. Thus, it is possible to achieve a uniform distribution of silica among rubber layers and further to improve the dispersion of silica in the rubber layers, thereby improving high speed performance (handling stability, grip performance) on snow- and ice-free roads at low temperatures. Furthermore, the cap tread which has cells or voids has the effect of improving grip performance at low temperatures due to the flexible rubber and also has the effect of improving performance on ice due to the drainage of water through the cells or voids in the rubber.

Thus, according to the present invention, it is possible to improve high speed performance (handling stability, grip performance) on snow- and ice-free roads at low temperatures while obtaining good fuel economy, abrasion resistance, and performance on ice and snow, thereby significantly improving the balance of these properties. In particular, by the use of a cap tread in which a small amount of SBR is added to a certain formulation containing predetermined amounts of silica, BR, and NR and/or IR according to the present invention, and further into which cells (voids) are introduced, the following effect is achieved: the balance of the properties is significantly (synergistically) improved as compared to cases where such SBR is added to different formulations, and cells (voids) are introduced.

[Cap tread]

The cold weather tire of the present invention includes a cap tread formed of a specific rubber composition for cap treads. First, the rubber composition for cap treads will be described.

NR and/or IR is used in the rubber composition for cap treads. Any NR or IR may be used including those known in the tire field.

The combined amount of NR and IR based on 100% by mass of the rubber component is preferably 20% by mass or more, more preferably 25% by mass or more. When the combined amount is 20% by mass or more, good fuel economy can be provided. The combined amount is preferably 60% by mass or less, more preferably 50% by mass or less, still more preferably 45% by mass or less. When the combined amount is 60% by mass or less, good performance on ice and snow and good abrasion resistance can be ensured.

BR is used in the rubber composition for cap treads. Any BR may be used including those known in the tire field. High-cis BR, among others, can be suitably used. The BR may also suitably be modified BR.

The amount of BR based on 100% by mass of the rubber component is 30% by mass or more. When the amount is 30% by mass or more, good performance on ice and snow (low-temperature performance) and good abrasion resistance can be provided. The amount of BR is preferably 35% by mass or more, more preferably 40% by mass or more. The upper limit of the amount of BR is preferably 80% by mass or less, more preferably 70% by mass or less. When the amount is 80% by mass or less, high speed performance on snow- and ice-free roads at low temperatures can be ensured.

The BR preferably has a cis content of 70% by mass or more, more preferably 90% by mass or more, still more preferably 95% by mass or more. The use of such high-cis BR allows for a balanced improvement in low-temperature performance and abrasion resistance. The amount of high-cis BR based on 100% by mass of BR is preferably 50% by mass or more, more preferably 90% by mass or more, most preferably 100% by mass.

The cis content herein is determined by infrared absorption spectrum analysis.

The combined amount of NR, IR, and BR based on 100% by mass of the rubber component is 80% by mass or more. When the combined amount is 80% by mass or more, good low-temperature performance can be provided. The combined amount is preferably 85% by mass or more, more preferably 90% by mass or more. The combined amount is preferably 99.7% by mass or less, more preferably 99.0% by mass or less. When the combined amount is 99.7% by mass or less, high speed performance on snow- and ice-free roads at low temperatures can be ensured.

SBR is used in the rubber composition for cap treads. Any SBR may be used, including solution polymerized SBR (S-SBR) and emulsion polymerized SBR (E-SBR). The SBR may be a modified SBR containing a functional group interactive with silica.

The amount of SBR based on 100% by mass of the rubber component is 0.3% by mass or more, preferably 0.5% by mass or more, more preferably 1% by mass or more, in order to improve high speed performance (handling stability, grip performance) on snow- and ice-free roads at low temperatures. In view of abrasion resistance, the amount of SBR is 10% by mass or less, preferably 9% by mass or less, more preferably 6% by mass or less, still more preferably 5% by mass or less. The incorporation of SBR in the range indicated above improves both grip performance during high speed running at low temperatures and handling stability during high speed running.

The SBR preferably has a styrene content of 10% by mass or more, more preferably 15% by mass or more. When the styrene content is 10% by mass or more, good performance on ice and snow can be provided. The styrene content is preferably 40% by mass or less, more preferably 35% by mass or less. When the styrene content is 40% by mass or less, the effects of the present invention can be sufficiently achieved. The styrene content herein is determined by $^1$H-NMR analysis.

The rubber component may include other rubbers as long as they do not inhibit the effects of the present invention. Examples of other rubbers include chloroprene rubber (CR), acrylonitrile butadiene rubber (NBR), ethylene-propylene-diene rubber (EPDM), butyl rubber (IIR), and halogenated butyl rubber (X-IIR). Each type of rubber such as NR may be a single material or a combination of two or more materials.

A filler including silica is used in the rubber composition for cap treads.

The total amount of the filler per 100 parts by mass of the rubber component is preferably 10 to 200 parts by mass, more preferably 20 to 180 parts by mass, still more preferably 30 to 150 parts by mass. When the total amount is within the range indicated above, the effects of the present invention can be achieved. Each type of filler such as silica may be a single material or a combination of two or more materials.

Any silica may be used, including, for example, dry silica (anhydrous silicic acid) and wet silica (hydrous silicic acid). Wet silica is preferred as it contains a large number of silanol groups.

The amount of silica based on 100% by mass of the filler is 60% by mass or more. In this case, a balanced improvement in fuel economy, abrasion resistance, and grip performance can be achieved and the effects of the present invention can be well achieved. The amount of silica is preferably 70% by mass or more, more preferably 80% by mass or more. The upper limit of the amount of silica is not particularly limited but is preferably 97% by mass or less, more preferably 95% by mass or less.

In the rubber composition for cap treads, the amount of silica per 100 parts by mass of the rubber component is preferably 50 parts by mass or more, more preferably 60 parts by mass or more, still more preferably 80 parts by mass or more, in order to obtain good abrasion resistance and good performance on ice and snow. The upper limit of the amount of silica is not particularly limited, but is preferably 200 parts by mass or less, more preferably 150 parts by mass or less, in order to obtain good processability and good fuel economy.

The silica preferably has a nitrogen adsorption specific surface area ($N_2$SA) of 150 m$^2$/g or more, more preferably 155 m$^2$/g or more, still more preferably 160 m$^2$/g or more, in order to significantly improve abrasion resistance and performance on ice and snow. The upper limit of the $N_2$SA is not particularly limited, but is preferably 400 m$^2$/g or less, more preferably 300 m$^2$/g or less, in order to obtain good workability and good processability. Herein, the nitrogen adsorption specific surface area of silica is measured by the BET method in conformity with ASTM D3037-81.

The silica preferably has a cetyltrimethylammonium bromide (CTAB) specific surface area of 150 m$^2$/g or more, more preferably 155 m$^2$/g or more, still more preferably 160 m$^2$/g or more, in order to significantly improve abrasion resistance and performance on ice and snow. The CTAB specific surface area is preferably 400 m$^2$/g or less, more preferably 300 m$^2$/g or less, in order to obtain good dispersion of silica. The CTAB specific surface area is measured in accordance with ASTM D3765-92.

Non-limiting examples of commercially available silica include Nipsil AQ ($N_2$SA: 200 $m^2$/g, CTAB specific surface area: 155 $m^2$/g) available from Tosoh Silica Corporation; Zeosil Premium 200MP ($N_2$SA: 200 $m^2$/g, CTAB specific surface area: 200 $m^2$/g) and HRS 1200MP ($N_2$SA: 200 $m^2$/g, CTAB specific surface area: 195 $m^2$/g) both available from Rhodia; and Ultrasil 9000GR ($N_2$SA: 240 $m^2$/g, CTAB specific surface area: 200 $m^2$/g) available from Evonik.

The rubber composition for cap treads preferably contains a silane coupling agent together with silica. Examples of the silane coupling agent include sulfide silane coupling agents such as bis(3-triethoxysilylpropyl)disulfide; mercapto silane coupling agents such as 3-mercaptopropyltrimethoxysilane and 3-octanoylthiopropyltriethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. Among these, sulfide silane coupling agents are preferred. The amount of the silane coupling agent per 100 parts by mass of silica is preferably 0.5 to 20 parts by mass, more preferably 1.5 to 15 parts by mass.

In the rubber composition for cap treads, the filler preferably includes carbon black. In this case, the properties of the tire such as abrasion resistance can be improved, and the balance of the properties can be significantly improved.

The carbon black preferably has a nitrogen adsorption specific surface area ($N_2$SA) of 50 $m^2$/g or more, more preferably 90 $m^2$/g or more, in order to obtain good properties such as abrasion resistance. The $N_2$SA is preferably 180 $m^2$/g or less, more preferably 130 $m^2$/g or less, in order to obtain good dispersibility. The $N_2$SA of carbon black is determined in accordance with JIS K 6217-2:2001.

The amount of carbon black per 100 parts by mass of the rubber component is preferably 5 parts by mass or more, more preferably 8 parts by mass or more. The amount is preferably 60 parts by mass or less, more preferably 40 parts by mass or less. When the amount is within the range indicated above, the balance of the properties can be significantly improved.

The rubber composition for cap treads preferably contains a plasticizer in order to well achieve the effects of the present invention. The term "plasticizer" refers to a material that imparts plasticity to a rubber component. Examples include fats and oils such as process oils, extender oils, vegetable oils, and animal fats; resins such as liquid polymers and liquid resins; and waxes. More specifically, the plasticizer is a component that can be extracted from a rubber composition using acetone.

The amount of the plasticizer per 100 parts by mass of the rubber component is preferably 20 parts by mass or more, more preferably 30 parts by mass or more, in order to improve processability and performance on ice and snow. The upper limit of the amount of the plasticizer is not particularly limited, but is preferably 150 parts by mass or less, more preferably 130 parts by mass or less, still more preferably 100 parts by mass or less, particularly preferably 80 parts by mass or less, in order to obtain good properties such as abrasion resistance.

In the rubber composition for cap treads, the plasticizer preferably includes a liquid plasticizer. The term "liquid plasticizer" refers to a plasticizer that is in the liquid state at 20°C, and examples include the fats and oils and the resins mentioned above.

The amount of the liquid plasticizer per 100 parts by mass of the rubber component is preferably 15 parts by mass or more, more preferably 20 parts by mass or more, still more preferably 25 parts by mass or more, in order to improve processability and performance on ice and snow. The upper limit of the amount of the liquid plasticizer is not particularly limited, but is preferably 150 parts by mass or less, more preferably 100 parts by mass or less, in order to obtain good properties such as abrasion resistance.

In the rubber composition for cap treads, the liquid plasticizer preferably includes an oil having a polycyclic aromatic content of less than 3% by mass (low PCA oil) as determined by the IP346 method. Examples of the low PCA oil include mild extraction solvates (MES), treated distillate aromatic extracts (TDAE), heavy naphthenic oils, and vegetable oils. The amount of low PCA oil per 100 parts by mass of the rubber component is preferably 5 to 100 parts by mass, more preferably 10 to 90 parts by mass, still more preferably 15 to 80 parts by mass.

The rubber composition for cap treads preferably contains an organic fiber. Any organic fiber may be used including those known in the tire field. For example, it may suitably be a composite (fiber) of a hydrophilic resin whose surface is provided with a coating layer.

The hydrophilic resin may be a resin that can show an affinity for water, that is, a resin having a hydrophilic group in the molecule. Examples include ethylene-vinyl alcohol copolymers, vinyl alcohol homopolymers, poly(meth)acrylate resins, polyamide resins, aliphatic polyamide-based resins, aromatic polyamide-based resins, polyester resins, polyolefin resins, polyvinyl alcohol-based resins, cellulose-based resins, and acrylic resins.

The surface of the composite (fiber) of a hydrophilic resin has an affinity for the rubber component, and is preferably provided with a coating layer formed of a resin having a melting point lower than the maximum vulcanization temperature (hereinafter, also referred to as "low melting point resin"). In this case, the composite (fiber) shows a good affinity for the neighboring rubber component while effectively maintaining the affinity for water of the hydrophilic resin itself. Furthermore, when a foaming agent is incorporated, the hydrophilic resin, which is less likely to melt during vulcanization, can be captured and thus the formation of holes (cells, voids) inside the composite (fiber) can be promoted.

Examples of the resin having an affinity for the rubber component include resins having a solubility parameter (SP value) close to that of the rubber component.

The low melting point resin refers to a resin having a melting point lower than the maximum vulcanization temperature. The maximum vulcanization temperature refers to the maximum temperature reached by the rubber composition during vulcanization. The upper limit of the melting point of the low melting point resin is preferably lower by 10°C or more, more preferably lower by 20°C or more than the maximum vulcanization temperature. For example, in the case where the maximum vulcanization temperature is set at 190°C, the melting point of the low melting point resin is usually selected within the range of lower than 190°C, preferably of 180°C or lower, more preferably of 170°C or lower. The melting point may be, for example, a peak melting temperature as determined using a DSC apparatus.

The low melting point resin may suitably be, for example, a polyolefinic resin. In this case, holes (cells, voids) can be formed inside the composite (fiber) while improving the dispersibility of the composite (fiber) of a hydrophilic resin in the rubber component.

The polyolefinic resin may have any of branched, linear, or other structures. The polyolefinic resin may also be an ionomer resin produced by crosslinking of ethylene-methacrylic acid copolymer molecules through a metal ion. Specific examples include polyethylene, polypropylene, polybutene, polystyrene, ethylene-propylene copolymers, ethylene-methacrylic acid copolymers, ethylene-ethyl acrylate copolymers, ethylene-propylene-diene terpolymers, ethylene-vinyl acetate copolymers, and ionomer resins of the foregoing.

The composite (fiber) of a hydrophilic resin provided with a coating layer formed of a low melting point resin can be produced, for example, by blending these resins with a mixing mill, and melt-spinning the blend into undrawn yarns, followed by hot drawing of the undrawn yarns into fibers.

The organic fiber, e.g. the composite, has an average length of usually 0.1 to 500 mm, preferably 0.1 to 7 mm, and an average diameter of usually 0.001 to 2 mm, preferably 0.005 to 0.5 mm. It also has an aspect ratio of usually 10 to 4,000, preferably 50 to 2,000. The aspect ratio refers to the ratio of the major axis to the minor axis of the composite (fiber).

The amount of the organic fiber, e.g. the composite, per 100 parts by mass of the rubber component is preferably 0.1 to 100 parts by mass, more preferably 0.1 to 50 parts by mass. When the amount is within the range indicated above, holes can be formed inside the organic fiber to obtain good water drainage while maintaining sufficient durability.

The rubber composition for cap treads preferably contains a foaming agent. For example, when the composite is used, a gas generated by the foaming agent during vulcanization can be entered into the hydrophilic resin through the melted coating layer of a low melting point resin to easily form cells having a shape according to the shape of the composite (fiber), namely elongated cells. As the tire wears, such cells function as drainage channels to impart water drainage to the tire, thereby improving performance on ice and snow.

Examples of the foaming agent include azodicarbonamide (ADCA), dinitrosopentamethylenetetramine (DPT), dinitrosopentastyrenetetramine, benzenesulfonyl hydrazide derivatives, p,p'-oxybis(benzenesulfonyl hydrazide) (OBSH), carbon dioxide-generating ammonium bicarbonate, sodium bicarbonate, ammonium carbonate, nitrogen-generating nitrososulfonylazo compounds, N,N'-dimethyl-N,N'-dinitrosophthalamide, toluenesulfonyl hydrazide, p-toluenesulfonyl semicarbazide, and p,p'-oxybis(benzenesulfonyl semicarbazide). Among these, azodicarbonamide (ADCA), dinitrosopentamethylenetetramine (DPT), and p,p'-oxybis(benzenesulfonyl hydrazide) (OBSH) are preferred, with azodicarbonamide (ADCA) or p,p'-oxybis(benzenesulfonyl hydrazide) (OBSH) being more preferred. The amount of the foaming agent per 100 parts by mass of the rubber component is preferably 0.1 to 20 parts by mass.

A rubber vulcanizate obtained by vulcanizing the rubber composition containing the foaming agent preferably has an expansion ratio of 0.1% to 50%, more preferably 3% to 40%. When the expansion ratio is within the range indicated above, it is possible to ensure the formation of cells which effectively function as drainage channels, while maintaining a moderate amount of cells, thereby avoiding risk of impairing durability. The expansion ratio of the rubber vulcanizate refers to an average expansion ratio (Vs), specifically one calculated from the following equation (I):

$$Vs = (\rho_0/\rho_1 - 1) \times 100 (\%) \quad (I)$$

wherein $\rho_1$ represents the density (g/cm$^3$) of the rubber vulcanizate (foamed rubber), and $\rho_0$ represents the density (g/cm$^3$) of the solid phase of the rubber vulcanizate (foamed rubber).

In addition to the above materials, the rubber composition for cap treads may appropriately contain various materials commonly used in the tire industry, such as antioxidants, surfactants, zinc oxide, stearic acid, waxes, vulcanizing agents, and vulcanization accelerators.

The rubber composition for cap treads can be prepared by known methods. For example, it may be prepared by kneading the components in a rubber kneading machine such as an open roll mill or Banbury mixer and vulcanizing the kneadate.

As described later, the unvulcanized rubber composition for cap treads is formed into a cap tread shape, for example, in a usual manner and then vulcanized with other tire components to produce a tire including a cap tread according to the present invention.

The cap tread has cells and/or voids. The cap tread having cells or voids provides improved grip performance at low temperatures due to the flexible rubber and also provides improved performance on ice due to the drainage of water through the cells or voids in the rubber. Cells or voids may be formed in the cap tread, for example, by incorporating the organic fiber (e.g. a composite of a hydrophilic resin whose surface is provided with a coating layer), a hollow fiber, and/or the foaming agent into the rubber composition for cap treads.

[Base tread]

The cold weather tire of the present invention preferably includes, in addition to the cap tread formed of the rubber composition for cap treads, a base tread formed of a rubber composition for base treads containing SBR. By provision of a base tread produced from a specific rubber composition for base treads together with the cap tread, the difference in rubber properties between the cap part and the base part of the tread portion is reduced so that the tire achieves better breaking properties and reduced noise levels.

The SBR content ratio between the rubber composition for base treads and the rubber composition for cap treads (base tread/cap tread ratio by mass) is preferably 100 to 1, more preferably 80 to 1, still more preferably 50 to 2, particularly preferably 40 to 3. When the SBR content ratio is within the range indicated above, the balance between the rubber properties of the cap part and those of the base part is improved, and further the migration of fillers or chemicals in the produced tire is moderately reduced, and handling stability during high speed running is also improved.

The rubber composition for base treads preferably contains SBR in an amount of 20% by mass or more, more preferably 30% by mass or more, still more preferably 40% by mass or more, based on 100% by mass of the rubber component in order to improve handling stability and processability. The upper limit of the amount of SBR is not particularly defined, but is preferably 80% by mass or less, more preferably 70% by mass or less, still more preferably 60% by mass or less, in order to obtain good fuel economy and good low-temperature properties.

In order to achieve a balanced improvement in fuel economy and handling stability, the rubber composition for base treads preferably contains silica in an amount of 0.1 to 10 parts by mass, more preferably 0.3 to 8 parts by mass, still more preferably 0.5 to 5 parts by mass, per 100 parts by mass of the rubber component. Any type of silica may be used. In view of resistance to breakage and other properties, the silica preferably has a nitrogen adsorption specific surface area ($N_2SA$) of 50 $m^2$/g or more, more preferably 100 to 200 $m^2$/g, still more preferably 150 to 200 $m^2$/g.

The rubber composition for base treads may appropriately contain various materials as described for the rubber composition for cap treads. It may also be prepared similarly as above.

A cold weather tire including the rubber composition for cap treads and the rubber composition for base treads can be produced from these rubber compositions by usual methods. Specifically, the rubber composition for cap treads and the rubber composition for base treads, which contain various additives as needed, before vulcanization may be extruded and processed into the shape of the respective components, and formed and assembled with other tire components on a tire building machine to build a unvulcanized tire. The unvulcanized tire is heated and pressurized in a vulcanizer to produce a tire.

According to the present invention, the rubber composition can be used to produce a pneumatic tire or non-pneumatic tire. Such cold weather tires can be used as tires for passenger vehicles, trucks and buses, two-wheeled vehicles, or other vehicles, or as high performance tires.

EXAMPLES

The present invention is specifically described with reference to, but not limited to, the examples below.

The chemicals used in the examples and comparative examples are listed below.

NR: TSR

BR: BR-150B available from Ube Industries, Ltd.

SBR: Buna SL4525-0 (styrene content: 25% by mass, non-oil extended, unmodified S-SBR) available from Lanxess

Silica 1: Nipsil AQ ($N_2SA$: 200 $m^2$/g, CTAB: 155 $m^2$/g) available from Tosoh Silica Corporation

Silica 2: Ultrasil VN3 ($N_2SA$: 175 $m^2$/g, CTAB: 175 $m^2$/g) available from Evonik

Silane coupling agent: Si75 available from Evonik Carbon black: DIABLACK I (ISAF class, $N_2SA$: 114 $m^2$/g) available from Mitsubishi Chemical Corporation

Oil: Vivatec 500 (TDAE oil) available from H&R

Resin: YS resin PX-1250 (terpene resin, softening point: 125°C) available from Yasuhara Chemical Co., Ltd.

Stearic acid: stearic acid beads "Tsubaki" available from NOF Corporation

Antioxidant: NOCRAC 6C (N-(1,3-dimethylbutyl)-N-phenyl-p-phenylenediamine) available from Ouchi Shinko Chemical Industrial Co., Ltd.

Zinc oxide: Zinc oxide #2 available from Mitsui Mining & Smelting Co., Ltd.

Foaming agent: NEOCELLBORN SB#51 (4,4'-oxybis(benzenesulfonyl hydrazide)) available from Eiwa Chemical Ind. Co., Ltd.

Organic fiber: see Production Example 1 below

Wax: "SUNNOC WAX" available from Ouchi Shinko Chemical Industrial Co., Ltd.

Sulfur: powdered sulfur available from Tsurumi Chemical Industry Co., Ltd.

Vulcanization accelerator 1: NOCCELER D (N,N'-diphenylguanidine) available from Ouchi Shinko Chemical Industrial Co., Ltd.

Vulcanization accelerator 2: NOCCELER NS (N-tert-butyl-2-benzothiazolylsulfenamide) available from Ouchi Shinko Chemical Industrial Co., Ltd.

<Production Example 1: Production of organic fiber (hydrophilic resin fiber provided with low melting point resin coating layer)>

Into a twin screw extruder were introduced 40 parts by mass of a polyethylene (NOVATEC HJ360 available from Japan Polyethylene Corporation, MFR: 5.5, melting point: 132°C) and 40 parts by mass of an ethylene-vinyl alcohol copolymer (EVAL F104B available from Kuraray Co., Ltd., MFR: 4.4, melting point: 183°C), and they were simultaneously extruded to prepare a hydrophilic resin fiber provided with a coating layer formed of polyethylene in a usual manner. The hydrophilic resin fiber had an average diameter of 20 $\mu$m and an average length of 3 mm.

<Method of preparing rubber composition for cap treads>

According to each of the formulations shown in Table 1 or 3, the materials listed in the base kneading step section were kneaded with a 1.7 L Banbury mixer (Kobe Steel, Ltd.) at 150°C for five minutes to give a kneadate. Next, the chemicals listed in the final kneading step section were added to the kneadate, followed by kneading with an open roll mill at 80°C for five minutes to obtain an unvulcanized rubber composition.

<Method of preparing rubber composition for base treads>

According to the formulation shown in Table 2, the materials excluding the sulfur and vulcanization accelerator were kneaded with a 1.7 L Banbury mixer (Kobe Steel, Ltd.) at 150°C for five minutes to give a kneadate. Next, the sulfur and vulcanization accelerator were added to the kneadate, followed by kneading with an open roll mill at 80°C for five minutes to obtain an unvulcanized rubber composition.

<Method of preparing test tire>

The obtained unvulcanized rubber composition for cap treads and unvulcanized rubber composition for base treads were formed into the shape of a cap tread and a base tread, respectively, and assembled with other tire components on a tire building machine to build an unvulcanized tire, which was then vulcanized at 170°C for 10 minutes to prepare a test tire (size: 195/65R15, cold weather tire for passenger vehicles).

[Evaluation]

The test tires as prepared above were evaluated as described below. The results are shown in Tables 1 and 3. In Table 1 (Examples 1 to 4 and Comparative Examples 1 and 2), the results are expressed as an index relative to Comparative Example 1 taken as reference. In Table 3, the results of Example 1 and Comparative Example 2 and the results of Comparative Example 3 are expressed as an index relative to Comparative Example 1 and Comparative Example 4, respectively, taken as reference.

<Expansion ratio (Vs)>

The expansion ratio of each cap tread formulation was calculated from the above-described equation (I).

<Fuel economy>

The rolling resistance of each test tire was measured using a rolling resistance tester by running the test tire mounted on a 15 × 6 JJ rim at an internal pressure of 230 kPa, a load of 3.43 kN, and a speed of 80 km/h. The results are expressed as an index, with the reference comparative example set equal to 100. A higher index indicates better fuel economy. Tires with an index of 85 or higher are practically acceptable.

<Abrasion resistance>

Each set of test tires was mounted on a front-engine, front-wheel-drive car of 2,000 cc displacement made in Japan. After a mileage of 8,000 km, the groove depth in the tire tread portion was measured. The distance at which the tire groove depth decreased by 1 mm was calculated and expressed as an index using the equation below. A higher index indicates better abrasion resistance.
Abrasion resistance index = (Distance at which groove depth of tire of each formulation example decreased by 1 mm)/(Distance at which groove depth of tire of reference comparative example decreased by 1 mm) × 100

<Performance on ice (grip performance on ice)>

The performance of the test tires mounted on a vehicle on ice was evaluated under the following conditions. Each set of test tires was mounted on a front-engine, front-wheel-drive car of 2,000 cc displacement made in Japan. The test was performed at the Asahikawa Tire Proving Ground (on ice) of Sumitomo Rubber Industries, Ltd. in Hokkaido, Japan. The temperature on ice was -6°C to - 1°C.

Braking performance (brake stopping distance on ice): The stopping distance on ice was measured which was the distance required for the car to stop after the brakes that lock up were applied at 30 km/h. The results are expressed as an index using the equation below, with the reference comparative example set equal to 100. A higher index indicates better braking performance on ice. Tires with an index of 85 or higher are practically acceptable.

```
(Index of grip on ice) = (Stopping distance of reference
comparative example)/(Stopping distance of each formulation
example) × 100
```

<Handling stability during high speed running at low temperatures>

Each set of test tires was mounted on a front-engine, front-wheel-drive car of 2,000 cc displacement made in Japan. A test driver drove the car at 100 km/h on snow- and ice-free roads at 0°C to 3°C at the Asahikawa Tire Proving Ground in Hokkaido, Japan. The test driver subjectively evaluated cornering performance and steering linearity. The subjective evaluation was made relative to the reference comparative example given a score of 100, as follows: A score of 120 was given if the test driver judged the performance was obviously improved; a score of 140 was given if a much better level of performance was observed.

<Grip performance during high speed running at low temperatures>

Each set of test tires was mounted on a front-engine, front-wheel-drive car of 2,000 cc displacement made in Japan. The car was driven on snow- and ice-free roads at 0°C to 3°C at the Asahikawa Tire Proving Ground in Hokkaido, Japan. The stopping distance was measured which was the distance required for the car to stop after the brakes that lock up were applied at 100 km/h.

The results are expressed as an index using the equation below, with the reference comparative example set equal to 100. A higher index indicates better grip performance (braking performance) during high speed running at low temperatures.

```
(Index of grip performance during high speed running at low
temperatures) = (Stopping distance of reference comparative
example)/(Stopping distance of each formulation example) ×
100
```

[Table 1]

Rubber composition for cap treads

| | | | Example | | | | Comparative Example | |
|---|---|---|---|---|---|---|---|---|
| | | | 1 | 2 | 3 | 4 | 1 | 2 |
| Amount (parts by mass) | Base kneading step | NR | 43 | 45 | 40 | 34 | 50 | 50 |
| | | BR | 50 | 50 | 58 | 60 | 50 | 50 |
| | | SBR | 7 | 5 | 2 | 6 | — | — |
| | | Silica 1 ($N_2SA$ 200) | 80 | 70 | 60 | 50 | 80 | 80 |
| | | Silica 2 ($N_2SA$ 175) | — | — | — | 50 | — | — |
| | | Silane coupling agent (Si75) | 5 | 4.5 | 4 | 10 | 5 | 5 |
| | | Carbon black ($N_2SA$ 114) | 10 | 20 | 30 | 10 | 10 | 10 |
| | | Oil (TDAE) | 35 | 35 | 35 | 75 | 35 | 35 |
| | | Resin | — | — | — | 25 | — | — |
| | | Stearic acid | 0.5 | 0.5 | 0.5 | 0.5 | 0.5 | 0.5 |
| | | Vulcanization accelerator 1 | 1.5 | 1.5 | 1 | 1.5 | 1.5 | 1.5 |
| | | Antioxidant | 2 | 2 | 2 | 2 | 2 | 2 |
| | | Zinc oxide | 1.2 | 1.2 | 1.2 | 1.2 | 1.2 | 1.2 |
| | Final kneading step | Sulfur | 1.5 | 1.5 | 1.5 | 2 | 1.5 | 1.5 |
| | | Foaming agent | 5 | 5 | 5 | 5 | 5 | — |
| | | Organic fiber | 0.5 | 0.5 | 0.5 | 0.5 | 0.5 | — |
| | | Stearic acid | 1 | 1 | 1 | 1 | 1 | 1 |
| | | Vulcanization accelerator 1 | 0.5 | 0.5 | 0.5 | 0.5 | 0.5 | 0.5 |
| | | Vulcanization accelerator 2 | 1.7 | 1.5 | 1.5 | 1.7 | 1.5 | 1.5 |
| | | Expansion ratio (%) | 31 | 30 | 29 | 22 | 32 | 0 |
| Evaluation result | | Fuel economy | 106 | 100 | 95 | 85 | 100 | 94 |
| | | Abrasion resistance | 104 | 110 | 114 | 108 | 100 | 113 |
| | | Performance on ice | 102 | 101 | 98 | 120 | 100 | 81 |
| | | Handling stability during high speed running at low temperatures | 120 | 120 | 120 | 140 | 100 | 105 |
| | | Grip performance during high speed running at low temperatures | 110 | 117 | 128 | 125 | 100 | 108 |

[Table 2]

Rubber composition for base treads

| | | | Formulation |
|---|---|---|---|
| Amount (parts by mass) | Base kneading step | NR | 40 |
| | | BR | 15 |
| | | SBR | 45 |
| | | Silica 2 ($N_2SA$ 175) | 5 |
| | | Carbon black ($N_2SA$ 114) | 40 |
| | | Oil (TDAE) | 30 |
| | | Wax | 1.5 |
| | | Stearic acid | 2 |
| | | Antioxidant | 2 |
| | | Zinc oxide | 3 |
| | Final kneading step | Sulfur | 2.5 |
| | | Vulcanization accelerator 2 | 2 |

The results in Table 1 demonstrate that, in the examples using tires including a cap tread in which a relatively small amount of SBR was added to a certain formulation containing predetermined amounts of NR, BR, and silica, and further into which cells and/or voids were introduced, a highly balanced improvement in fuel economy, abrasion resistance, performance on ice and snow, and high speed performance (handling stability, grip performance) on low temperature roads was achieved. In contrast, in the comparative examples where no SBR was added, or where no SBR was added and further no cell or void was introduced, the tires exhibited greatly inferior properties.

[Table 3]

Rubber composition for cap treads

| | | | Example | Comparative Example | Comparative Example | |
|---|---|---|---|---|---|---|
| | | | 1 | 2 | 3 | 4 |
| Amount (parts by mass) | Base kneading step | NR | 43 | 50 | 68 | 75 |
| | | BR | 50 | 50 | 25 | 25 |
| | | SBR | 7 | — | 7 | – |
| | | Silica 1 ($N_2SA$ 200) | 80 | 80 | 80 | 80 |
| | | Silica 2 ($N_2SA$ 175) | — | — | — | — |
| | | Silane coupling agent (Si75) | 5 | 5 | 5 | 5 |
| | | Carbon black ($N_2SA$ 114) | 10 | 10 | 10 | 10 |
| | | Oil (TDAE) | 35 | 35 | 35 | 35 |
| | | Resin | — | — | — | — |
| | | Stearic acid | 0.5 | 0.5 | 0.5 | 0.5 |
| | | Vulcanization accelerator 1 | 1.5 | 1.5 | 1.5 | 1.5 |
| | | Antioxidant | 2 | 2 | 2 | 2 |
| | | Zinc oxide | 1.2 | 1.2 | 1.2 | 1.2 |
| | Final kneading step | Sulfur | 1.5 | 1.5 | 1.5 | 1.5 |
| | | Foaming agent | 5 | — | 5 | — |
| | | Organic fiber | 0.5 | — | 0.5 | — |
| | | Stearic acid | 1 | 1 | 1 | 1 |
| | | Vulcanization accelerator 1 | 0.5 | 0.5 | 0.5 | 0.5 |
| | | Vulcanization accelerator 2 | 1.7 | 1.5 | 1.7 | 1.7 |
| | | Expansion ratio (%) | 32 | 0 | 30 | 0 |
| Evaluation result | | Fuel economy | 106 | 94 | 102 | 100 |
| | | Abrasion resistance | 104 | 113 | 82 | 100 |
| | | Performance on ice | 102 | 81 | 108 | 100 |
| | | Handling stability during high speed running at low temperatures | 120 | 105 | 110 | 100 |
| | | Grip performance during high speed running at low temperatures | 110 | 108 | 105 | 100 |

The results in Table 3 show that, in the case where a small amount of SBR was added to a certain formulation containing 50 parts of BR according to the present invention and, further, cells (voids) were introduced (Example 1 vs. Comparative Example 2), the balance of fuel economy, abrasion resistance, performance on ice and snow, and high speed performance (handling stability, grip performance) on low temperature roads was significantly improved as compared to the case where such SBR was added to a formulation containing 25 parts of BR, which is outside the range specified according to the present invention, and cells (voids) were introduced (Comparative Example 3 vs. Comparative Example 4). It is therefore demonstrated that the balance of the properties was synergistically improved by the use of a cap tread in which a relatively small amount of SBR was added to a certain formulation containing predetermined amounts of NR, BR, and silica, and further into which cells (voids) were introduced.

**Claims**

1. A cold weather tire, comprising a cap tread, the cap tread being formed of a rubber composition for cap treads that comprises:

a rubber component including polybutadiene rubber, styrene butadiene rubber, and at least one of natural rubber or polyisoprene rubber; and
a filler,
the rubber composition having a combined amount of the natural rubber, the polyisoprene rubber, and the polybutadiene rubber of 80% by mass or more, an amount of the polybutadiene rubber of 30% by mass or more, and an amount of the styrene butadiene rubber of 0.3% to 10% by mass, each based on 100% by mass of the rubber component,
the filler including 60% by mass or more of silica based on 100% by mass of the filler,
the cap tread having cells or voids or both.

2.  The cold weather tire according to claim 1,
    wherein the rubber composition for cap treads has a combined amount of the natural rubber, the polyisoprene rubber, and the polybutadiene rubber of 90% by mass or more, and an amount of the styrene butadiene rubber of 0.3% to 5% by mass, each based on 100% by mass of the rubber component.

3.  The cold weather tire according to claim 1 or 2,
    wherein the rubber composition for cap treads comprises the silica in an amount of 50 parts by mass or more per 100 parts by mass of the rubber component.

4.  The cold weather tire according to any one of claims 1 to 3,
    wherein the polybutadiene rubber in the rubber composition for cap treads has a cis content of 70% by mass or more.

5.  The cold weather tire according to any one of claims 1 to 4,
    wherein the rubber composition for cap treads comprises a plasticizer in an amount of 20 parts by mass or more per 100 parts by mass of the rubber component.

**Patentansprüche**

1.  Kaltwetterreifen, umfassend eine Decklauffläche,
    wobei die Decklauffläche aus einer Kautschukzusammensetzung für Decklaufflächen gebildet ist, die umfasst:

    eine Kautschukkomponente, die Polybutadienkautschuk, Styrol-Butadien-Kautschuk und mindestens eines von Naturkautschuk oder Polyisoprenkautschuk umfasst; und
    einen Füllstoff,
    wobei die Kautschukzusammensetzung eine kombinierte Menge des Naturkautschuks, des Polyisoprenkautschuks und des Polybutadienkautschuks von 80 Massen-% oder mehr, eine Menge des Polybutadienkautschuks von 30 Massen-% oder mehr und eine Menge des Styrol-Butadien-Kautschuks von 0,3 Massen-% bis 10 Massen-%, jeweils bezogen auf 100 Massen-% der Kautschukkomponente, aufweist,
    wobei der Füllstoff 60 Massen-% oder mehr Siliciumdioxid, bezogen auf 100 Massen-% des Füllstoffs, enthält,
    wobei die Decklauffläche Zellen oder Hohlräume oder beides aufweist.

2.  Kaltwetterreifen nach Anspruch 1, wobei die Kautschukzusammensetzung für Decklaufflächen eine kombinierte Menge des Naturkautschuks, des Polyisoprenkautschuks und des Polybutadienkautschuks von 90 Massen-% oder mehr und eine Menge des Styrol-Butadien-Kautschuks von 0,3 Massen-% bis 5 Massen-%, jeweils bezogen auf 100 Massen-% der Kautschukkomponente, aufweist.

3.  Kaltwetterreifen nach Anspruch 1 oder 2, wobei die Kautschukzusammensetzung für Decklaufflächen das Siliciumdioxid in einer Menge von 50 Massenteilen oder mehr pro 100 Massenteile der Kautschukkomponente umfasst.

4.  Kaltwetterreifen nach einem der Ansprüche 1 bis 3, wobei der Polybutadienkautschuk in der Kautschukzusammensetzung für Decklaufflächen einen cis-Gehalt von 70 Massen-% oder mehr aufweist.

5.  Kaltwetterreifen nach einem der Ansprüche 1 bis 4, wobei die Kautschukzusammensetzung für Decklaufflächen einen Weichmacher in einer Menge von 20 Massenteilen oder mehr pro 100 Massenteile der Kautschukkomponente umfasst.

**Revendications**

1. Pneumatique pour temps froid, comprenant une bande de roulement formant coiffe,
   la bande de roulement formant coiffe étant formée d'une composition de caoutchouc pour bande de roulement formant coiffe qui comprend :

   un composant de caoutchouc incluant du caoutchouc polybutadiène, du caoutchouc styrène-butadiène, et au moins un caoutchouc parmi du caoutchouc naturel ou du caoutchouc polyisoprène ; et
   un agent de charge,
   la composition de caoutchouc ayant une quantité combinée de caoutchouc naturel, de caoutchouc polyisoprène, et de caoutchouc polybutadiène de 80 % en masse ou plus, une quantité de caoutchouc polybutadiène de 30 % en masse ou plus, et une quantité de caoutchouc styrène-butadiène de 0,3 % à 10 % en masse, basée chacune sur 100 % en masse du composant de caoutchouc,
   l'agent de charge incluant 60 % en masse ou plus de silice, sur la base de 100 % en masse de l'agent de charge,
   la bande de roulement formant coiffe ayant des cellules ou des vides ou les deux.

2. Pneumatique pour temps froid selon la revendication 1,
   dans lequel la composition de caoutchouc pour bande de roulement formant coiffe a une quantité combinée de caoutchouc naturel, de caoutchouc polyisoprène, et de caoutchouc polybutadiène égale à 90 % en masse ou plus, et une quantité de caoutchouc styrène-butadiène de 0,3 % à 5 % en masse, basée chacune sur 100 % en masse du composant de caoutchouc.

3. Pneumatique pour temps froid selon la revendication 1 ou 2,
   dans lequel la composition de caoutchouc pour bande de roulement formant coiffe comprend de la silice dans une quantité de 50 parties en masse ou plus pour 100 parties en masse du composant de caoutchouc.

4. Pneumatique pour temps froid selon l'une quelconque des revendications 1 à 3,
   dans lequel le caoutchouc polybutadiène dans la composition de caoutchouc pour bande de roulement formant coiffe a une teneur de cis de 70 % en masse ou plus.

5. Pneumatique pour temps froid selon l'une quelconque des revendications 1 à 4,
   dans lequel la composition de caoutchouc pour bande de roulement formant coiffe comprend un plastifiant dans une quantité de 20 parties en masse ou plus pour 100 parties en masse du composant de caoutchouc.

**REFERENCES CITED IN THE DESCRIPTION**

**Patent documents cited in the description**

- EP 2105461 A1
- US 5965661 A
- JP H01165635 A
- JP 2015129238 A